# EUROPEAN PATENT SPECIFICATION

(11) **EP 0 627 884 B1**
(45) Date of publication and mention of the grant of the patent: **21.01.1998**
(21) Application number: 93906476.2
(22) Date of filing: 26.02.1993
(51) Int. Cl.: A23D 7/00, A23C 9/15, A23L 1/0562, A23L 1/09

(54) **LOW FAT SPREAD**
BROTAUFSTRICH MIT NIEDRIGEM FETTGEHALT
PATE A TARTINER A FAIBLE TENEUR EN MATIERES GRASSES

(30) Priority: 06.03.1992 EP 92301955
(43) Date of publication of application: 14.12.1994
(73) Proprietor: UNILEVER PLC, London EC4P 4BQ (GB); UNILEVER N.V., 3000 DK Rotterdam (NL)
(72) Inventor: DANIELS, Stephen Charles Unilever Res.Colworth Lab, Sharnbrook, Bedford MK44 1LQ (GB); MORRISON, Anthony Unilever Res. Colworth Lab., Sharnbrook, Bedford MK44 1LQ (GB); SMITH, Penny E. Unilever Res. Colworth Lab., Sharnbrook, Bedford MK44 1LQ (GB)
(74) Representative: Sikken, Antonius H. J. M.
(86) International application number: EP9300467
(87) International publication number: WO9317565

(56) References cited:
- EP-A- 0 237 120
- EP-A- 0 509 707
- DE-A- 3 710 152
- GB-A- 2 229 077
- US-A- 4 869 919
- RESEARCH DISCLOSURE no. 300, 10 April 1989, HAVANT GB page 285 D. GUILE ET AL. 'Low fat spreads containing gellan gum' Abstract 30079

## Description

The present invention is concerned with spread products, in particular with spread products of low fat content, and processes for their preparation.

Many attempts have been made to formulate low fat spread products. Amongst the various reasons why such products are desired is the wish to reduce the caloric content of the spread and other dietetic considerations and the wish to lower the production costs, in particular by reducing the raw material costs.

A substance that has widely been applied as a fat extender is water. This use of water has, for example, led to the introduction of so-called halvarines. If relatively high levels of water are used, often thickening agents and/or gelling agents are used for avoiding adverse effects of the high water level.

For example EP 298 561 (Unilever N.V.) describes the preparation of edible plastic dispersions not having a continuous fat phase, said composition including at least two gelling agents forming two gel-forming compositions.

A problem with the products of EP 298 561 is that they often do not have a flavour which is highly appreciated by the consumer. Furthermore products according to EP 298 561 sometimes do not have an optimal texture and/or appearance and sometimes are somewhat grainy.

GB 2,229,077 relates to margarines containing 5-30 wt% of fat, 8-15 % maltodextrin, 0.5-3% modified starch, 1-2 % whey protein concentrate, 0.4-0.6 % carrageenan and 0.4-0.6 % gelatin.

EP 237 120 relates to fat-continuous spreads containing at least 10% fat phase, and in which the dispersed aqueous phase may be based on gelatin and hydrolysed starch.

EP 509 707 which was not published before the priority date of this application and discloses spreads comprising 2-20% hydrolysed maltodextrins and 0.05-1.5% alginate, 0.5-5% gelatin and a calcium source.

It is the object of the present invention to formulate low fat spread products having a good flavour, texture, appearance and which are not grainy. Surprisingly it has been found that these high quality, low fat products can be obtained if specific gelling agents are used at specified levels in combination with a narrowly defined level of fat.

Accordingly the present invention relates to a water-continuous spread comprising:
(A) from 2 to 7 wt% of gelatin;
(B) from 5 to 30 wt% of gelling hydrolysed starch;
   and
(C) from 1.2 to 4 wt% of fat.

Although applicants do not wish to be bound by any theory it is believed that the good quality of the product may be caused by the fact that the gelatin and gelling hydrolysed starch may form two condensed gelled phases, while the fat is present as globules between these gelled phases. Surprisingly, the levels of ingredients as specified above provide the good quality of the spread.

Compositions of the invention comprise as the first gelling agent from 2 to 7 wt% of gelatin, more preferred from 2 to 6 wt%, most preferred from 2 to 5 wt%. Any commercially available gelatin may be used, although it is preferred to have a gelatin having a bloom strength between 100 and 300, such as 120, 150 and 250. Especially preferred is the use of gelatin having a bloom strength of about 270.

In addition to the gelatin, compositions of the invention comprise from 5 to 30 wt% of a gelling hydrolysed starch, in particular maltodextrin. Generally these materials will have a low D.E. value, for example less than 10, more preferred 1-7, most preferred 1.5 to 4. The level of gelling hydrolysed starch is preferably from 7 to 25 wt%, more preferred 9-20 wt%, most preferred from 10-17 wt%. Especially preferred is the use of Paselli SA2 and N-oil2 as gelling hydrolysed starch materials.

Optionally compositions of the invention may comprise in addition to the above mentioned gelatin and gelling hydrolysed starch other gelling or thickening agents. Examples of such materials are carrageenan, locust bean gum, xanthan gum, amylose, pectin, alginate, agar, gellan, denatured whey protein, denatured bovine serum protein, denatured soy protein and microcrystalline cellulose. Preferably, however, the total level of these gelling and/or thickening ingredients other than gelatin and gelling hydrolysed starch is less than 10 wt%, more preferred from 0-5 wt%, most preferred 0-0.5 wt%. For taste reasons, in an especially preferred embodiment of the invention, the spread is substantially free from these ingredients. Also for taste reasons, especially preferably the compositions of the invention are substantially free from carrageenan (for example 0 to 0.2 wt%).

Compositions of the invention comprise from 1.2 to 4 wt% of fat, more preferred are fat levels from 1.2 to 3 wt%.

Throughout this specification the terms oil and fat are used interchangeably. They are meant to include triglycerides of natural or synthetic origin such as soybean oil, sunflower oil, palm oil, fish oil, rapeseed oil, coconut oil, and hydrogenated, fractionated and/or interesterified triglyceride mixtures as well as edible substances that are physically similar to triglycerides such as waxes, e.g. jojoba oil and poly fatty acid esters of mono- or di-saccharides, and that can be used as replacement for or in admixture with triglycerides.

Preferably the fat is present in the form of small fat globules, having a volume weighted mean diameter of less than 20 µm, more preferred from 0.1 to 5 µm, most preferred from 0.5 to 2 µm. The presence of these small fat globules in low fat spreads of the invention has the distinct advantage of providing an improved appearance to the product.

In a very preferred embodiment of the invention at least part of the fat is dairy fat. Preferably at least 10 wt% based on the total weight of the fat is dairy fat, more preferred more than 50 wt%, most preferred more than 90 wt% or even 100 wt%. The dairy fat can be derived from any dairy source such as whole milk, semi-skimmed milk, skimmed milk, (cultured) buttermilk, butter milk powder, skimmed milk powder, (Greek) yoghurt, quark, (low fat) fromage frais, (low fat) cottage cheese, butter, (Philadelphia) cream cheese, (double) cream, Ricotta cheese etc.

The use of dairy sources wherein the ratio of fat to protein is high, for example cream cheese and cream, is preferred. These materials provide an excellent flavour to the product.

For optimising the flavour of the spreads of the invention it is especially preferred that the dairy fat is incorporated in the product by using at least 5 wt% of a dairy ingredient in the spread. The optimum level of dairy ingredients will be dependent on the type and fat level of the dairy product. Also combinations of dairy products may be used.

If whole milk, semi skimmed milk, skimmed milk or combinations thereof are used, the total level thereof is preferably from 40 to 85 wt% of the composition, more preferred 50-80 wt%, most preferred 55-80 wt%.

If yoghurt, quark, cottage cheese, cream, cream cheese or fromage frais or a combination thereto is used, the total level is preferably from 2-40 wt%, more preferred 5-30 wt%. Under some circumstances it may be advantageous to use a mixture of milk and these ingredients, for example in weight ratios between 20 : 1 and 2 : 1, the total level of yoghurt/quark/cottage cheese/fromage frais/cream/cream cheese and milk being from 60-85 wt%.

Preferably spreads of the invention are plastic in the sense that they can be spread onto bread without tearing the bread. Generally plastic spreads will have a stress strain relation with a maximum stress occurring at strain of 0.001-2, the maximum stress at this strain being 0.01-100 kPa and with a ratio of plastic stress and the maximum stress of 0.1 to 1. A suitable method for determining these values is given in EP 298 561.

In addition to the above mentioned ingredients, spreads of the invention may comprise a number of optional ingredients such as flavouring, salt, preservatives, acidifiers, vitamins, colouring materials etc.

Preferably the level of flavouring materials (other than those which are incorporated through the dairy ingredients) is less than 5 wt%, for example 0.01 to 2 wt% or 0.01 to 0.5 wt%. In a preferred embodiment of the invention, however, spreads are free from flavouring ingredients other than those incorporated through the dairy ingredients. Preferably the level of salt (sodium chloride) is from 0- 4 wt%, more preferred 0.1 to 3 wt%, most preferred 0.5 to 1.2 wt%. Preservatives are preferably incorporated at a level of 0- 4 wt%, more preferred 0.01 to 1 wt%, most preferred 0.05 to 0.3 wt%. Especially preferred is the use of potassium sorbate. A preferred colouring material is carotene; preferred levels of colouring material are from 0 - 1 wt%, more preferred 0.01 to 0.2 wt%. Acidifiers may be incorporated to bring the pH of the product to the desired level, preferably the pH of the product is from 3 to 10, more preferred 3.5 to 7. A suitable acidifier is for example lactic acid or citric acid.

Another optional ingredient which may be present in compositions of the invention are proteins. Preferably the protein level (including gelatin) in spreads of the invention is from 0.5 to 15 wt%, more preferred, 2 to 6 wt%, most preferred 2.5 to 4 %. In an especially preferred embodiment of the invention the proteins are partially obtained from dairy sources. In another preferred embodiment of the invention the level of proteins other than gelatin is low, for example less than 1 wt%, more preferred less than 0.5 wt%, most preferred 0-0.1 wt%. In another preferred embodiment of the invention the protein is wholly or partially a vegetable protein, especially soy bean protein. For example if mixtures of these ingredients are used suitable weight ratios of dairy protein to vegetable protein may for example be from 10 : 1 to 1 : 10.

In some embodiments of the invention it may be advantageous, especially for reducing the graininess of the spread and/or for improving the texture, to use no or only low levels of Sodium caseinate. Preferably the level of sodium caseinate is less than 3 wt%, more preferred less than 1.5 wt%, most preferred spreads of the invention are substantially free from sodium caseinate.

The spread may further containing small particles such as herbs and vegetables. The total level thereof will generally be less than 10 wt%.

Spreads of the invention will generally comprise fairly high levels of water, say from 50 to 94.4 wt% of the composition, more preferred 70 to 92 wt%, most preferred 80 to 90 wt%. Water may be incorporated as such, or as part of the other ingredients such as milk etc. Spreads of the invention are water-continuous in the sense that they comprise a continuous aqueous phase. Water-continuous spreads can readily be distinguished from fat-continuous spreads by virtue of conductivity measurements.

Spreads of the invention can suitably be used as bread spreads to replace e.g. margarine or halvarine, but they can also suitable be used as flavoured spread, for example cheese spreads, meat spreads, nut spreads, sweet spreads or vegetable spreads.

Spreads of the invention may be prepared by any suitable method for the preparation of water-continuous spread products. A preferred method however involves the mixing of the ingredients, optionally followed by pasteurisation and homogenisation, followed by cooling in one or more scraped surface heat exchangers (A-units) to a temperature of 0 to 10 °C, optionally followed by processing through one or more C-units. Pasteurisation is especially preferred for extending the keepability of the product. Homogenisation is preferred for effecting the formation of small fat globules to enhance the appearance of the spread. After preparation the spreads are generally packed in wrappers or containers, generally tubs with a content of 2-1000 g will be used, especially 5, 10, 15, 250 or 500 g. Preferably the packed product is stored at refrigerator temperatures.

### Example I

The following compositions were prepared by stirring the ingredients into the water and milk (if any). The mixture was heated to 80°C to pasteurize it. The mixture was then passed through an in-line homogeniser and then cooled down by passage through a scraped surface heat exchanger (A-unit) to about 1°C. The product was filled in 500 grammes tubs and stored for 2 weeks at 5°C.

### Compositions (parts by weight)

All products contain the following:

| | |
|---|---|
| Paselli SA2 | 12.0 |
| Gelatin (270 bloom) | 3.0 |
| Sodium chloride | 0.7 |
| Potassium sorbate | 0.13 |
| β-Carotene | 0.08 |

In addition the compositions contained (parts by weight):

| Composition | water | whole milk | semi-skim milk | skim milk | low fat yoghurt | Cottage cheese | Fat level wt% |
|---|---|---|---|---|---|---|---|
| 1. | 7.55 | 76.9 | - | - | - | - | 3.0 |
| 2. | 22.04 | - | 62.5 | - | - | - | 1.0 |
| 3. | 7.55 | 71.9 | - | - | 5 | - | 2.8 |
| 4. | 7.55 | 66.9 | - | - | 10 | - | 2.7 |
| 5. | 7.55 | 61.9 | - | - | 15 | - | 2.5 |
| 6. | 7.55 | 56.9 | - | - | 20 | - | 2.4 |
| 7. | 7.55 | 51.9 | - | - | 25 | - | 2.2 |
| 8. | 22.04 | - | 62.5 | - | - | - | 1.0 |
| 9. | 39.0 | - | 35.0 | - | - | 10 | 0.5 |
| 10. | 4.4 | - | - | 60 | - | 20 | 0.8 |
| 11. | 28.5 | - | 50.0 | - | - | 5 | 1.0 |

All products have an improved flavour as compared to similar products without or with very low levels of fat.

### Example II

Example I is repeated by using N-oil2 instead of Passelli SA2. Similar results are obtained.

### Example III

Example I is repeated by using 1 part by weight of sodium chloride instead of 0.7 part. Similar results are obtained.

### Example IV

Example I composition I is repeated by replacing the 76.9 parts of milk by 38.5 parts of milk, 36.9 parts of water and 1.5 part of soybean fat. Similar results are obtained.

### Example V

Example I is repeated by adding 3 parts by weight of Nacaseinate to the composition. The resulting compositions have a reduced flavour, increased graininess and reduced quality of texture as compared to the compositions of Example I.

### Example VI

Example I is repeated except that the products are after the A-unit processed through a C-unit. Satisfactory products comparable in quality and appearance to the products of Example I are obtained.

### Example VII

Example I compositions 9-11 is repeated by using Philadelphia cream cheese instead of cottage cheese and water instead of (semi-) skim milk.

### Example VIII

Example I compositions 9-11 is repeated by using Ricotta cheese instead of cottage cheese and water instedad of (semi-) skim milk

### Example IX

Example I composition 11 is repeated by using double cream instead of cottage cheese, and replacing milk by water.

### Example X

Example I composition 10 is repeated by using buttermilk or cultured buttermilk instead of skim milk.

### Example XI

Example I composition 11 is repeated by using Quark instead of cottage cheese.

## Claims

1. A water-continuous spread comprising:
(A) from 2 to 7 wt% of gelatin;
(B) from 5 to 30 wt% of gelling hydrolysed starch; and
(C) from 1.2 to 4 wt% of fat.

2. A spread according to claim 1, wherein at least 10 wt% based on the total weight of the fat is dairy fat.

3. A spread according to claim 2, wherein the dairy fat is derived from cream or cream cheese.

4. A spread according to any one of claims 1 to 3, wherein the D.E. value of the gelling hydrolysed starch is less than 10 and the level of gelling hydrolysed starch is from 7 to 25 wt%.

5. A spread according to any of claims 1 to 3, wherein the fat is present in the form of fat globules having a volume weighted mean diameter of less than 20 µm.

6. A spread according to any one of claims 1 to 3, wherein the level of carrageenan is less than 0.2 wt%.

7. A spread according to any one of claims 1 to 3, wherein the composition is substantially free from gelling and/or thickening agents other than gelatin and hydrolysed starch.

8. A spread according to any one of claims 1 to 3, wherein the level of sodium caseinate is less than 3 wt%.

9. A spread according to any one of claims 1 to 3, comprising 50 to 94.4 wt% of water.

10. Method of preparing a spread according to any one of claims 1 to 3, comprising the sequential steps of mixing the ingredients, pasteurisation, homogenisation, and cooling.

## Patentansprüche

1. Wasserkontinuierlicher Aufstrich umfassend:
(A) von 2 bis 7 Gew.-% Gelatine,
(B) von 5 bis 30 Gew.-% gelierende, hydrolysierte Stärke und
(C) von 1,2 bis 4 Gew.-% Fett.

2. Aufstrich nach Anspruch 1, worin mindestens 10 Gew.-%, bezogen auf das Gesamtgewicht des Fettes, Molkereifett sind.

3. Aufstrich nach Anspruch 2, worin das Molkereifett aus Sahne oder Rahmkäse gewonnen wird.

4. Aufstrich nach irgendeinem der Ansprüche 1 bis 3, worin der D.E.-Wert der gelierenden, hydrolysierten Stärke kleiner als 10 ist und der Gehalt an gelierender, hydorlysierter Stärke von 7 bis 25 Gew.-% beträgt.

5. Aufstrich nach irgendeinem der Ansprüche 1 bis 3, worin das Fett in Form von Fettkügelchen mit einem volumen-gewichteten mittleren Teilchendurchmesser von weniger als 20 µm vorliegt.

6. Aufstrich nach irgendeinem der Ansprüche 1 bis 3, worin der Gehalt an Carrageenan kleiner als 0,2 Gew.-% ist.

7. Aufstrich nach irgendeinem der Ansprüche 1 bis 3, worin die Zusammensetzung im wesentlichen frei von gelierenden und/oder verdickenden Mitteln, außer Gelatine und hydrolysierter Stärke, ist.

8. Zusammensetzung nach irgendeinem der Ansprüche 1 bis 3, worin der Gehalt an Natriumcaseinat kleiner als 3 Gew.-% ist.

9. Zusammensetzung nach irgendeinem der Ansprüche 1 bis 3, umfassend 50 bis 94,4 Gew.-% Wasser.

10. Verfahren zur Herstellung eines Aufstrichs nach irgendeinem der Ansprüche 1 bis 3, umfassend die aufeinanderfolgenden Schritte des Mischens der Bestandteile, des Pasteurisierens, Homogenisierens und Abkühlens.

## Revendications

1. Une pâte à tartiner avec phase aqueuse continue comprenant
(A) 2 à 7 % en masse de gélatine ;
(B) 5 à 30 % en masse d'un amidon hydrolysé gélifiant ; et
(C) 1,2 à 4 % en masse de matières grasses.

2. Une pâte à tartiner selon la Revendication 1, dans laquelle au moins 10 % en masse, sur la base de la masse totale de la matière grasse, est de la matière grasse dérivée de produits laitiers.

3. Une pâte à tartiner selon la Revendication 2, dans laquelle la matière grasse dérivée de produits laitiers est dérivée de crème fraîche ou de fromage à la crème.

4. Une pâte à tartiner selon l'une quelconque des Revendications 1 à 3, dans laquelle la valeur DE de l'amidon hydrolysé gélifiant est inférieure à 10, et la quantité d'amidon hydrolysé gélifiant est comprise entre 7 et 25 % en masse.

5. Une pâte à tartiner selon l'une quelconque des Revendications 1 à 3, dans laquelle la matière grasse est présente sous la forme de globules de matières grasses présentant un diamètre moyen pondéré en volume inférieur à 20 µm.

6. Une pâte à tartiner selon l'une quelconque des Revendications 1 à 3, dans laquelle la quantité de carraghénine est inférieure à 0,2 % en masse.

7. Une pâte à tartiner selon l'une quelconque des Revendications 1 à 3, dans laquelle la composition est substantiellement exempte d'agents gélifiants et/ou épaississants autres que de la gélatine et de l'amidon hydrolysé.

8. Une pâte à tartiner selon l'une quelconque des Revendications 1 à 3, dans laquelle la quantité de caséinate de sodium est inférieure à 3 % en masse.

9. Une pâte à tartiner selon l'une quelconque des Revendications 1 à 3, comprenant 50 à 94,4 % en masse d'eau.

10. Méthode de préparation d'une pâte à tartiner selon l'une quelconque des Revendications 1 à 3, comprenant les étapes séquentielles consistant à mélanger les ingrédients, à les pasteuriser, à les homogénéiser et à les refroidir.
